# EUROPEAN PATENT APPLICATION

(11) **EP 2 696 316 A1**
(43) Date of publication of application: **12.02.2014**
(21) Application number: 13179689.8
(22) Date of filing: 08.08.2013
(51) Int. Cl.: G06Q 10/10

(54) **Method for providing schedule management function and electronic device thereof**

(30) Priority: 08.08.2012 KR 20120086785
(71) Applicant: Samsung Electronics Co., Ltd, Gyeonggi-do 443-742 (KR)
(72) Inventor: Jang, Keum-Ju, Seoul (KR)
(74) Representative: Nederlandsch Octrooibureau

(57) **Abstract**

An apparatus and a method for managing a schedule in an electronic device are provided. In the method, a user's input is detected from a current output screen including a schedule and schedule registration information is extracted from the schedule according to the user's input. A schedule management function is executed and the extracted schedule register information is registered in the schedule management function.

## Description

### BACKGROUND OF THE INVENTION

### 1. Field of the Invention:

The present invention relates to an electronic device. More particularly, the present invention relates to an electronic device for providing a schedule management function.

### 2. Description of the Related Art:

An electronic device that has become a modern necessity due to ease in portability and is now evolving to become a multimedia apparatus providing various services such as voice and video communication functions, an information input/output function, and data storing.

As described above, as an electronic device gains a multimedia service, an amount of information to process and an amount of information to display increase correspondingly. Accordingly, there is an increased interest in an electronic device having a touchscreen that can increase the size of a display unit by improving a space utility.

The touchscreen is an input and display unit for performing an input and display of information on one screen. Accordingly, in the case of using the touchscreen, the electronic device can increase a display area by removing a separate input unit such as a keypad. For example, in the case where an entire screen uses a full touch capability to which the touchscreen has been applied, substantially all of the front side of the electronic device is utilized, so that the screen size may be extended.

Recently, an electronic device is recognized as a class of product that is always carried by a user, so that a user actively utilizes a service provided by the electronic device.

For example, the user uses a schedule management function in the electronic device instead of using an existing diary.

However, the schedule management function provided by the electronic device of the related art is typically used in the same way as the existing diary is used.

For example, the user should memorize a schedule to register in the schedule management function and then execute the schedule management function via a menu select process.

After that, the user should select a date corresponding to a memorized schedule from a calendar of the executed schedule management function, and then register a relevant schedule via a direct key input operation. That is, the user is required to perform a somewhat complicated process in order to register a schedule in the schedule management function of the related art.

In the case of registering a plurality of schedules, the above operations must be performed repeatedly, aggravating the inconvenience to the user.

Therefore, to address the above problems, there is a need for an apparatus and a method for simplifying a schedule registration process in an electronic device.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and a method for providing a simplified schedule management function in an electronic device.

Another aspect of the present invention is to provide an apparatus and a method for analyzing an output screen to extract schedule registration information in an electronic device.

Still another aspect of the present invention is to provide an apparatus and a method for immediately registering a schedule described on a web screen in a schedule management function (schedule application) in an electronic device.

Yet another aspect of the present invention is to provide an apparatus and a method for immediately registering a schedule described in a received message in a schedule management function in an electronic device.

Still yet another aspect of the present invention is to provide an apparatus and a method for grasping a schedule to register using a mark defined by a user in an electronic device.

In accordance with an aspect of the present invention, a method for providing a schedule management function in an electronic device is provided. The method includes detecting a user's input from a current output screen including a schedule, extracting schedule registration information from the current output screen according to the user's input, executing a schedule management function, and registering the extracted schedule registration information in the schedule management function.

In an exemplary implementation, the method further includes, after registering the schedule registration information, outputting a message informing that the schedule registration information is registered in the schedule management function.

In an exemplary implementation, registering the schedule registration information in the schedule management function includes, when a plurality of schedule registration information are extracted, outputting a list of the extracted schedule registration information, the user selecting schedule registration information from the output list, and registering the selected schedule registration information in the schedule management function.

In an exemplary implementation, extracting schedule registration information to register in the schedule management function includes storing information of a position where the user's input has been detected, obtaining an image of the current output screen, recognizing text corresponding to the stored position information in the obtained image, and defining the obtained text as schedule registration information.

In an exemplary implementation, the user's input detected for extracting the schedule registration information includes at least one of an input of successively selecting schedules for a predetermined time, an input of selecting a schedule using a mark of a predetermined shape, an input of selecting a schedule using a multi-touch, an input of selecting a plurality of schedules and then selecting at least one schedule of the plurality of schedules to register in the schedule management function, and an input of selecting a plurality of schedules using single touch.

In an exemplary implementation, the schedule registration information includes at least one of a schedule title and a detailed schedule included in the current output screen.

In accordance with another aspect of the present invention, an electronic device for providing a schedule management function is provided. The electronic device includes at least one processor, a memory, and at least one program stored in the memory. When the at least one program is executed by the at least one processor, the at least one processor controls to detect a user's input from a current output screen including a schedule, to extract schedule registration information from the current output screen according to the user's input, to execute a schedule management function, and to register the extracted schedule registration information in the schedule management function.

In an exemplary implementation, the electronic device may be configured to output a message informing that the schedule registration information is registered in the schedule management function.

In an exemplary implementation, the electronic device may be configured to, when a plurality of schedule registration information are extracted, output a list of the extracted schedule registration information, wherein the user selects schedule registration information to register in the schedule management function from the output list.

In an exemplary implementation, the electronic device may be configured to store information of a position where the user's input has been detected, obtain an image of a current output screen, recognize text corresponding to the stored position information in the obtained image, and define the obtained text as schedule registration information.

In an exemplary implementation, the electronic device may be configured to extract the schedule registration information by detecting at least one of an input of successively selecting schedules for a predetermined time, an input of selecting a schedule using a mark of a predetermined shape, an input of selecting a schedule using a multi-touch, an input of selecting a plurality of schedules and then selecting at least one schedule of the plurality of schedules to register in the schedule management function, and an input of selecting a plurality of schedules using single touch.

In an exemplary implementation, the electronic device may be configured to extract at least one of a schedule title and a detailed schedule included in a current output screen as the schedule registration information.

In accordance with still another aspect of the present invention, a computer readable storage medium is provided. The computer readable storage medium is encoded with one or more programs of instructions which, when executed by an electronic device, cause the device to detect a user's input on a current screen including a schedule, extracting the schedule registration information from the current screen according to the user's input, execute a schedule management function, and register the extracted schedule management information in the schedule management function.

Other aspects, advantages and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating the construction of an electronic device providing a schedule management function according to an exemplary embodiment of the present invention;

FIG. 2 is a flowchart illustrating a process for providing a schedule management function in an electronic device according to an exemplary embodiment of the present invention;

FIG. 3 is a flowchart illustrating a process for extracting schedule registration information in an electronic device according to an exemplary embodiment of the present invention;

FIGS. 4A and 4B are views illustrating a screen for registering a schedule of a web screen in a schedule management function in an electronic device according to an exemplary embodiment of the present invention;

FIGS. 5A to 5C are views illustrating a process for extracting schedule registration information in an electronic device according to another exemplary embodiment of the present invention;

FIGS. 6A to 6D are views illustrating a process for detecting a schedule to register in a schedule management function in an electronic device according to another exemplary embodiment of the present invention;

FIGS. 7A to 7D are views illustrating a process for detecting a schedule to register in a schedule management function in an electronic device according to another exemplary embodiment of the present invention;

FIGS. 8A to 8D are views illustrating a process for detecting a schedule to register in a schedule management function in an electronic device according to another exemplary embodiment of the present invention;

FIGS. 9A and 9B are views illustrating a process for detecting a schedule to register in a schedule management function in an electronic device according to another exemplary embodiment of the present invention;

FIGS. 10A and 10B are views illustrating a screen for providing a list of schedule register information to register in a schedule management function in an electronic device according to another exemplary embodiment of the present invention;

FIGS. 11A and 11B are views illustrating a screen for executing a schedule management function in an electronic device according to an exemplary embodiment of the present invention;

FIGS. 12A and 12B are views illustrating a screen for registering a schedule of a web screen in a schedule management function in an electronic device according to another exemplary embodiment of the present invention;

FIGS. 13A and 13B are views illustrating a screen for registering a schedule of a web screen in a schedule management function in an electronic device according to still another exemplary embodiment of the present invention; and

FIG. 14A is a flowchart illustrating a process for registering a schedule of an output screen in a schedule management function in an electronic device according to exemplary embodiment of the present invention; and FIG. 14B is a view illustrating the construction of an electronic device that registers a schedule of an output screen in a schedule management function according to another embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Exemplary embodiments of the present invention provide an apparatus and a method for simplifying a schedule registration procedure in an electronic device.

The electronic device can extract schedule registration information with respect to a schedule included in a web screen, a message content, etc., and register the extracted schedule in a schedule management function (for example, a schedule application such as a calendar). At this point, the electronic device can determine a schedule to register in the schedule management function using a mark defined by a user. In addition, in an exemplary implementation, a mark for designating a schedule to register in the schedule management function, a mark for completing designation of schedule register information, etc., can be defined by the user.

In addition, the electronic device may be a portable electronic device, and may be a device such as a portable terminal, a mobile phone, a media player, a tablet computer, a handheld computer, or a Personal Digital Assistant (PDA). Also, the electronic device may be an arbitrary portable electronic device including a device combining two or more functions among these devices. According to another embodiment, the electronic device can include any kind of an electronic device including a display and an input unit. For example, the electronic device can include a desktop computer, a refrigerator, a multi-function peripheral, a video game console, a digital camera, a Mobile Internet Device (MID), a tablet Personal Computer (PC), an Ultra Mobile PC (UMPC), a navigation, a smart Television (TV), a digital clock, and a Motion Pictures Experts Group (MPEG)-2 Audio Layer III (MP3) player.

In addition, the following exemplary embodiments describe an electronic device including a touchscreen. However, it will be obvious to a person of ordinary skill in the art that the exemplary embodiments described in the present specification are properly applicable to electronic devices or computing devices having a display unit and a different input unit, though they might not include the touchscreen.

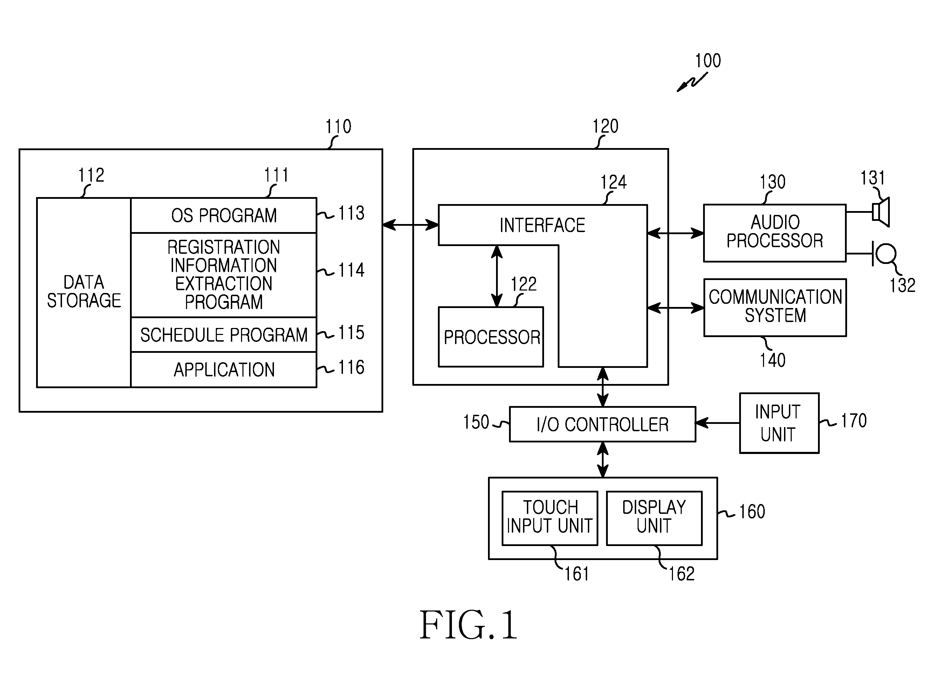

FIG. 1 is a block diagram illustrating the construction of an electronic device providing a schedule management function according to an exemplary embodiment of the present invention.

Referring to FIG. 1, the electronic device 100 may include a memory 110, a processor unit 120, an audio processor 130, a communication system 140, an input/output (I/O) controller 150, a touchscreen 160, and an input unit 170. Here, one or more elements of the above-mentioned elements can be configured in plural forms. For example, the electronic device may include a plurality of memories 110 and a plurality of communication systems 140.

Each element is described below.

The memory 110 may include a program storage area 111 for storing at least one program for controlling the operation of the electronic device 100, and a data storage area 112 for storing data generated or received during execution of the at least one program. For example, the data storage area 112 can store various updatable data such as a phonebook, calling messages, received messages, a user's mark information designating a schedule to register in a schedule management function, etc. Here, the user's mark information can include a mark for designating a schedule (schedule to register in the schedule management function), a mark for informing schedule designation completion, etc. The user can define at least one of the marks to store the same in the memory 110.

Also, the program storage area 111 can include an Operating System (OS) program 113, a registration information extraction program 114, a schedule program 115, and at least one application 116. Here, a program included in the program storage area 111 is a set of instructions and may be expressed as an instruction set. In addition, the program included in the program storage 111 can be expressed as a hardware configuration. It is well known in the art that any function that can be executed in software can alternatively be implemented by specialized hardware. Thus, any reference herein to a program includes both software and hardware implementations. For example, the electronic device can include an OS module, a register extract module, and a schedule module.

The OS program 113 can include various elements for controlling a general system operation. A control of the general system operation denotes, for example, memory management and control, storage hardware (device) control and management, power control and management, etc. The OS program 113 can also perform a function for swift communication between various hardware (devices) and program elements (modules).

The registration information extraction program 114 can include at least one element for processing to extract information to register in the schedule management function from a current output screen. That is, the registration information extraction program 114 can detect a user's input for the current output screen to extract schedule registration information for a schedule selected by the user. Here, the schedule registration information denotes information for displaying the schedule selected by the user in the schedule management function. The schedule registration information may be a schedule title, a detailed schedule, etc.

For example, when detecting the user's input for the output screen, the registration information extraction program 114 can store information of the position where the input has been detected, and then obtain an image of the output screen.

After that, the registration information extract program 114 can determine the position where the user's input has been detected from the image and recognize text of the relevant position to define the recognized text as the schedule registration information.

For another example, when a HyperText Markup Language (HTML)-based screen is output, the registration information extract program 114 can analyze an HTML tag to recognize text of a position where the user's input has been detected, and define the recognized text as the schedule registration information.

At this point, the registration information extract program 114 can determine a position for text recognition using a user's input continuously detected for a predetermined time. Here, the position for text recognition may be a position where the user's input has been detected.

In addition, the registration information extraction program 114 can determine the position for text recognition by detecting a mark of a shape defined in advance by the user. Currently, the mark defined in advance by the user may be a mark for designating a schedule to register in a schedule management function, a mark for completing designation of schedule registration information, etc. Respective marks may have the same shape or different shapes.

In addition, the registration information extraction program 114 can determine the position for text recognition by detecting an input of the user who finally selects a schedule to register in the schedule management function with a plurality of schedules selected.

The schedule program 115 is an application that provides the schedule management function and can include at least one element for processing to register a schedule selected from the current output screen by the user in the schedule management function.

At this point, the schedule program 115 can register a schedule in the schedule management function using schedule registration information extracted by the registration information extract program 114.

For example, in the case where a plurality of schedule titles, a detailed schedule, etc., are extracted as schedule registration information by the registration information extraction program 114, the schedule program 115 can determine a date for schedule registration using the detailed schedule and register all schedule registration information in the relevant date.

In addition, the schedule program 115 can determine a date for schedule registration using the detailed schedule and register only a schedule title in the relevant date.

The mentioned schedule program 115 can be a kind of the application. It is not limited to a specific application, but can include any program comprising such functionality.

The application 116 can include an element for at least one application installed in the electronic device 100, and the mentioned schedule program 115 can be a kind of the application 116.

The processor unit 120 includes at least one processor 122 and an interface 124. Here, the processor 122 and the interface 124 can be integrated in at least one integrated circuit, or implemented as separate elements.

The interface 124 can play a role of a memory interface for controlling an access of the processor 122 and the memory 110.

In addition, the interface 124 can play a role of a peripheral interface for controlling connection between an input/output peripheral and the processor 122 of the electronic device 100.

The processor 122 can control the electronic device 100 to provide the schedule management function using at least one program. At this point, the processor 122 can control to provide the schedule management function corresponding to a relevant program by executing at least one program stored in the memory 110. For example, the processor 122 can include a schedule registration processor for performing registration information extraction, schedule registration, etc. That is, the schedule management function of the electronic device 100 can be performed using software such as a program stored in the memory 110 or hardware such as the schedule register processor.

The audio processor 130 can provide an audio interface between the user and the electronic device 100 via a speaker 131 and a microphone 132.

The communication system 140 can perform a communication function for voice communication and data communication of the electronic device 100. Currently, the communication system may be divided into a plurality of sub modules supporting different communication networks. For example, though not limited thereto, the communication network can include a Global System for Mobile Communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a wireless Local Area Network (LAN), a Bluetooth network, Near Field Communication (NFC), etc.

The I/O controller 150 can provide an interface between an I/O unit such as the touchscreen 160 and the input unit 170, and an interface.

The touchscreen 160 is an I/O unit for performing an output of information and an input of information, and can include a touch input unit 161 and a display unit 162.

The touch input unit 161 can provide touch information, detected via a touch panel, to the processor unit 120 via the I/O controller 150. Currently, the touch input unit 161 can change touch information to an instruction structure such as touch_down, touch_move, and touch_up, and provide the same to the processor unit 120.

The display unit 162 can display the state information of the electronic device 100, a character input by the user, moving pictures, still pictures, etc. For example, the display unit 162 can output a screen including a schedule, and output a process of registering a schedule selected on the screen by the user in the schedule management function. Here, the process for registering the selected schedule in the schedule management function can include all processes described via the following drawings such as outputting a list of a plurality of schedules selected by the user, outputting a menu or an icon for executing the schedule management function, etc.

The input unit 170 can provide input data generated by the user's selection to the processor unit 120 via the I/O controller 150. For example, the input unit 170 can include only a control button for controlling the electronic device 100. For another example, the input unit 170 may be configured using a keypad for receiving input data from the user. According to an exemplary embodiment of the present invention, the input unit 170 can generate input data designating information to register in the schedule management function.

Though not shown, the electronic device 100 can further include elements for providing an additional function such as a camera module for image shooting or moving picture shooting, a broadcast reception module for receiving broadcasting, a digital sound source reproduction module such as an MP3 module, a short distance wireless communication module for short distance wireless communication, and a proximity sensor module for proximity sensing, etc., and programs for operating these.

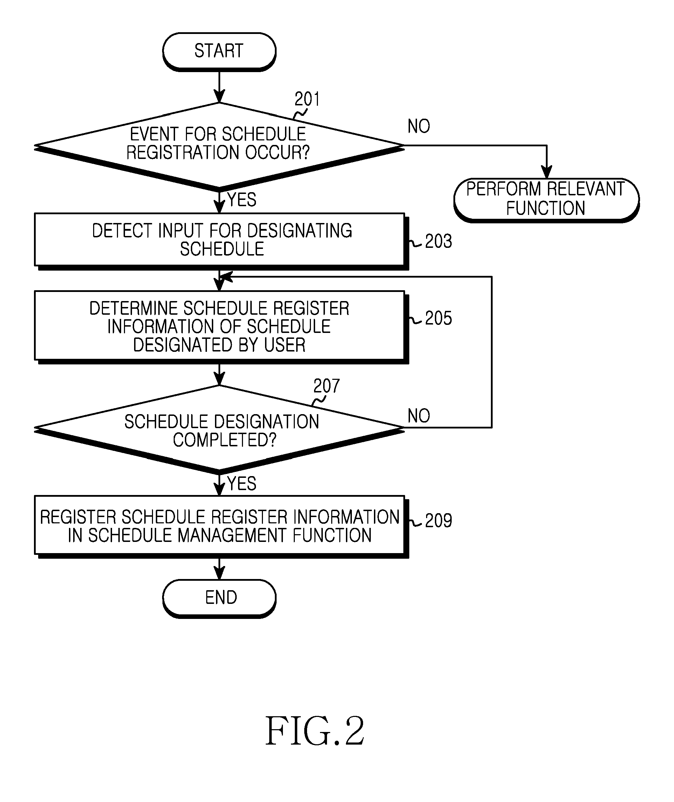

FIG. 2 is a flowchart illustrating a process for providing a schedule management function in an electronic device according to an exemplary embodiment of the present invention.

Referring to FIG. 2, the electronic device can determine whether an event for schedule registration occurs in step 201. Here, the event for schedule registration denotes selecting a schedule included in the current output screen and automatically registering the selected schedule in the schedule management function of the electronic device. For example, the event for schedule registration may be registering a schedule included in a screen (for example, a web page screen) of a web browser in the schedule management function. In addition, the event for schedule registration may be registering a schedule included in a message (such as Short Message Service (SMS), e-mail, instant message, etc.) in the schedule management function.

In addition, the event for schedule registration may be registering other people's schedule information in the schedule management function of the user with the schedule management screen of other people output using a screen share function.

Here, the schedule management function may be a schedule application provided by the electronic device.

When determining that the event for schedule registration does not occur in step 201, the electronic device can perform a function (output web page, output message content, etc.) corresponding to a service in execution.

In contrast, when determining that the event for schedule registration occurs in step 201, the electronic device proceeds to step 203 to determine whether an input of the user who designates (selects) a schedule to register is detected. At this point, the electronic device detects the user's mark for schedule designation. For example, the user can designate a schedule to register using a touch input. At this point, the electronic device operates a timer for a predetermined time and then can detect the user's input until the timer expires, and the user can perform successive touch inputs for a predetermined time in order to select a plurality of schedules.

For another example, the user can define a mark for designating a schedule to register and a mark for completing schedule designation in a predetermined shape, and then designate a schedule to register using the relevant mark.

For still another example, the user can select a plurality of schedules and then finally designate a schedule to register in the schedule management function.

After that, the electronic device proceeds to step 205 to determine schedule register information for a schedule selected by the user, and then proceeds to step 207 to determine whether schedule designation is completed.

Here, the schedule register information denotes information for displaying a schedule selected by the user in the schedule management function, and can be a schedule title, a detailed schedule, etc. At this point, the electronic device can extract schedule registration information. For example, the electronic device can store a point (position information) where the user's input has been detected, and then obtain an image (captured image) of the output screen. After that, the electronic device can obtain schedule registration information for a portion of the image where the user's input has been detected via a text recognize mode (function) for the obtained image.

For another example, the electronic device can store a point of the screen where the user's input has been detected, and then analyze code information (such as HTML tag information, code information of frame buffer, etc.) of the output screen to obtain schedule registration information for a portion of the screen where the user's input has been detected.

Of course, the electronic device according to an exemplary embodiment of the present invention can apply a plurality of known technologies that can analyze the output screen besides the mentioned image analysis and code information analysis to obtain schedule registration information.

In addition, the electronic device determines whether the user's mark for completing schedule registration information designation is detected in step 207.

When determining the schedule designation has not been completed in step 207, the electronic device proceeds to step 205 to re-perform the process for determining schedule registration information for a schedule selected by the user.

In contrast, when determining the schedule designation has been completed in step 207, the electronic device proceeds to step 209 to execute the schedule management function and process to register the schedule registration information determined in advance. For example, while outputting a web page including an experience event reception period, in the case of allowing the user to select a schedule title of "experience event" and a reception period (detailed schedule) of "May 1", the electronic device can determine and register the schedule title of "experience event" in the date of "May 1" of the schedule management function. Accordingly, when the user executes the schedule management function afterwards, the user can view that the selected schedules are registered in the relevant date.

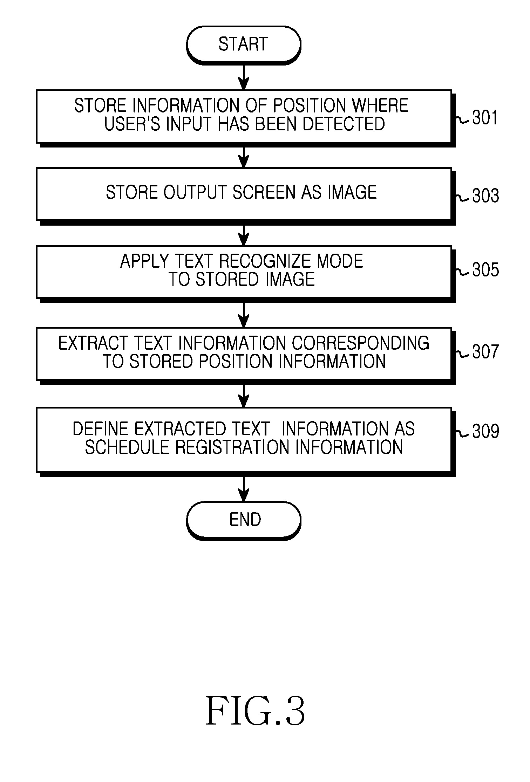

FIG. 3 is a flowchart illustrating a process for extracting schedule registration information in an electronic device according to an exemplary embodiment of the present invention.

Referring to FIG. 3, the electronic device stores position information of a point where a user's input has been detected in step 301, and then proceeds to step 303 to store a current output screen as an image. Here, the user's input denotes the user's input for selecting a schedule to register in the schedule management function on the current output screen. The user can select a schedule using a plurality of methods (such as selection of schedule during operation of timer, selection of schedule using mark of a shape defined in advance, etc.). In addition, the electronic device can store the current output screen as an image using a screen capture function.

After that, the electronic device proceeds to step 305 to apply a text recognition mode (function) for a stored image to recognize text of the image, and then proceeds to step 307 to extract text information corresponding to the position information stored in step 301.

After that, the electronic device proceeds to step 309 to define the extracted text information as schedule registration information.

Though the electronic device has extracted schedule registration information by analyzing an image of an output screen in FIG. 3, the electronic device according to an exemplary embodiment of the present invention can obtain text information of a relevant position by analyzing code information (for example, HTML information of a web page) of an output screen.

In addition, the electronic device according to an exemplary embodiment of the present invention can obtain an image of an output screen at every point where a schedule to register in the schedule management function is selected, but in another exemplary embodiment, after a user selects all schedules to register in the schedule management function, the electronic device can finally obtain an image of an output screen.

In case of obtaining an image of an output screen at every point where a schedule is selected, the electronic device can register the selected schedule in the schedule management function whenever an image is obtained, but in this case, a problem of obtaining a plurality of images may occur.

In contrast, in the case of selecting all schedules and then obtaining an image of the output screen, only one image is obtained, but after the image is obtained (for example, after all schedules are selected), the selected schedules are registered in the schedule management function.

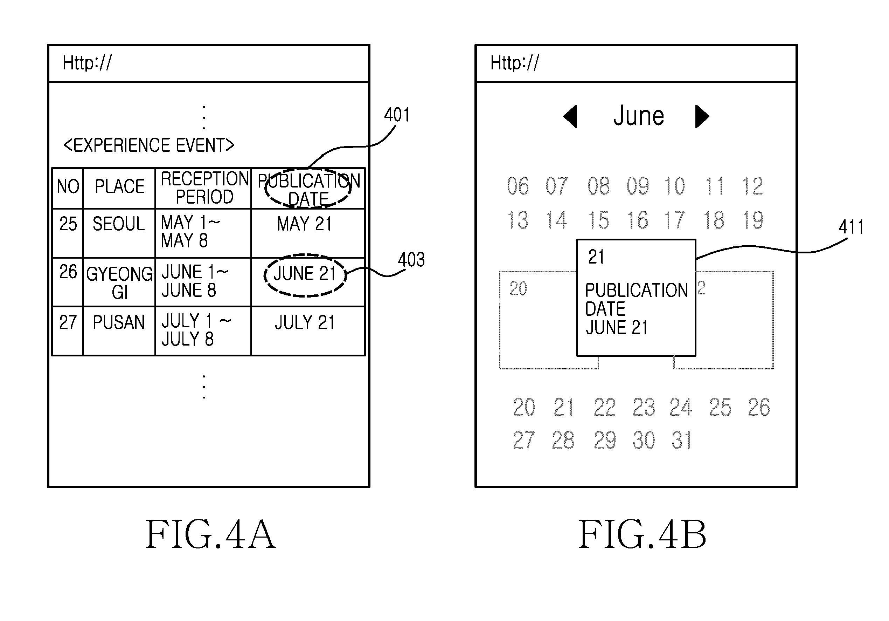

FIGS. 4A and 4B are views illustrating a screen for registering a schedule of a web screen in a schedule management function in an electronic device according to an exemplary embodiment of the present invention.

Referring to FIG. 4A, the electronic device can execute a web browser to output a web screen. A portion of the output web screen can include schedule information as illustrated.

Generally, the electronic device can provide the schedule management function managing the schedule of the user. To register a schedule included in the web screen in the schedule management function of the related art, the user should memorize a schedule (detailed schedule, schedule title, etc.) of the web screen. After that, the user should execute the schedule management function, for example, via menu selection, and then select a date corresponding to the memorized schedule to register the schedule.

However, the electronic device according to an exemplary embodiment of the present invention can process to automatically register a schedule selected from a current output screen by the user in the schedule management function.

That is, the electronic device can detect the user's input to extract schedule registration information as illustrated in the drawing. Here, the schedule registration Information may be a title of a schedule to register, a detailed schedule, etc. A title of a schedule in the illustrated drawing may be <experience event>, the number of times, a place, a reception period, a publication date, etc. The detailed schedule may be a reception period or a date described in a publication date item.

For example, when detecting the user's input for an item of "publication date" and a date of "June 21" as illustrated, the electronic device can extract "publication date" 401 and "June 21" 403 as registration information.

As described above, the electronic device according to an exemplary embodiment of the present invention can store information of a position where the user's input has been detected, and then obtain an image of an output screen, and recognize text in the obtained image to extract schedule registration information. This denotes one exemplary embodiment for a method for recognizing text of a portion of the screen where the user's input has been detected from a current output screen.

FIG. 4B is a view illustrating a screen where the electronic device has registered schedule registration information, for example, the registration information 401 and 403 of FIG. 4A, extracted in advance in the schedule management function.

Referring to FIG. 4B, when extracting the schedule registration information as described above, the electronic device can process to register the extracted schedule registration information in the schedule management function.

That is, as illustrated, the electronic device executes the schedule management function to determine a date corresponding to schedule registration information, and then registers in step 411 the schedule register information in the relevant date. The illustrated drawing illustrates a case of successively registering schedule register information of "publication date" 401 and "June 21" 403 in a corresponding date of June 21. For another exemplary embodiment, the electronic device may use schedule registration information corresponding to "June 21" for only selecting a date, and register only "publication date" in the relevant date. This is to register only a schedule title in the relevant date. This is for registering only minimum schedule registration information, as a region (region where schedule register information can be input) allowed to each date in the schedule management function might be narrow.

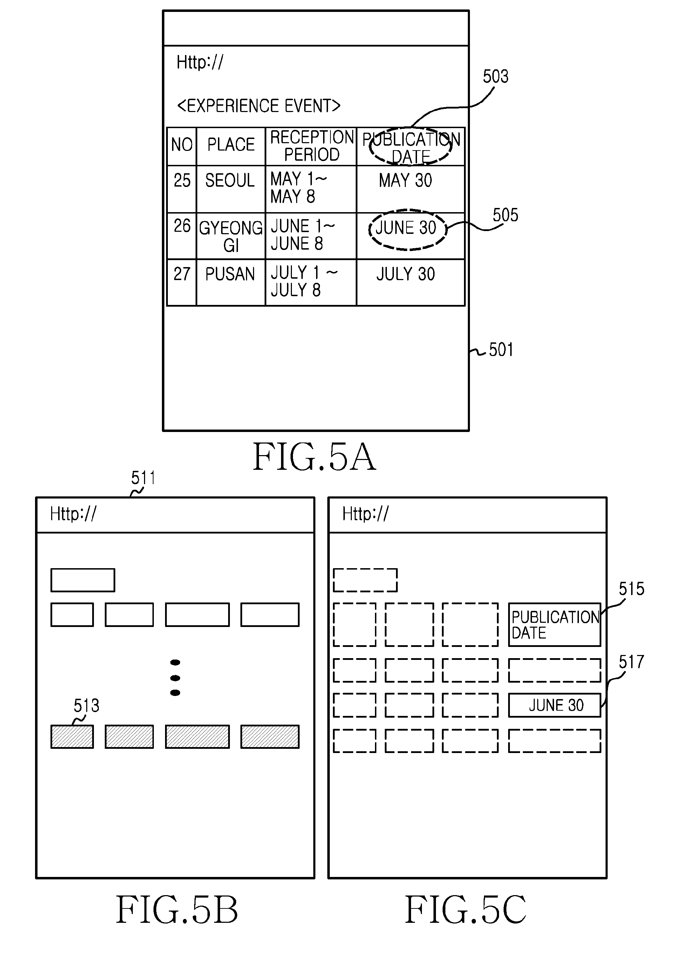

FIGS. 5A to 5C are views illustrating a process for extracting schedule registration information in an electronic device according to another exemplary embodiment of the present invention.

Referring to FIG. 5A, the electronic device can execute a web browser to output a web screen 501. A portion of the output web screen 501 may include schedule information as illustrated.

To address the problem of the related art schedule management function where a user is required to execute the schedule management function manually to input a schedule to register, the electronic device according to an exemplary embodiment of the present invention can extract schedule registration information from a current output screen. Here, the schedule registration information is information displayed in the schedule management function. The electronic device directly extracts the schedule registration information from the output screen, so that a problem where the user should memorize a schedule to register in the schedule management function can be resolved. For example, with an exemplary embodiment of the present invention, the user is not required to remember or manually enter the schedule registration information.

Of course, a plurality of schedules can be included in the output screen of the electronic device and the user can register a specific schedule in the schedule management function by selecting the schedule to register from the output screen. Also, the user can register an entire schedule included in the output screen in the schedule management function at one time.

Furthermore, the user can register a schedule title, etc., besides a schedule in the schedule management function. For this purpose, the user can select a plurality of information to register, and use the selected information as a schedule title.

The illustrated drawing illustrates a case where the user has selected information of "publication date" 503 and "June 30" 505.

The electronic device that has determined a schedule and a schedule title to register in the schedule management function can obtain an image of a current output screen including the schedule to register.

FIG. 5B is a view illustrating a region for extracting schedule registration information from an image of an output screen.

Referring to FIG. 5B, the electronic device can recognize text from an image 511 of an output screen. The illustrated drawing illustrates a region where text which can be recognized by the electronic device exists is divided. Of course, other text besides a schedule may exist in the output screen, but according to a purpose of an exemplary embodiment of the present invention, the output screen illustrates only a region where text for a schedule exists and is recognized.

That is, the electronic device can extract schedule registration information corresponding to a user's input using a text recognition mode (function) for an image.

FIG. 5C is a view illustrating a screen that has extracted schedule registration information in an electronic device according to an exemplary embodiment the present invention.

Referring to FIG. 5C, the electronic device stores information of a position where a user's input, that has selected a schedule to register, has been detected.

Accordingly, in the case where text recognition of an image is possible, the electronic device can determine information of a position of a user's input stored in advance to determine text information of the relevant position and define the determined text information as schedule registration information.

The illustrated drawing illustrates a case where schedule registration information of "publication date" 515 and "June 30" are extracted from a plurality of text recognition regions, and this schedule register information is registered in the schedule management function.

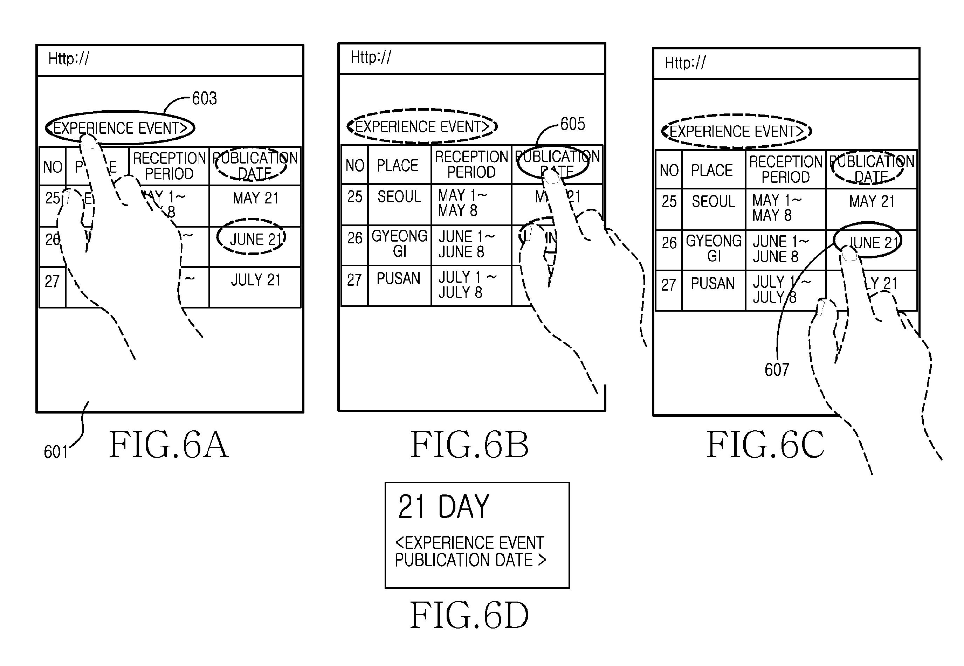

FIGS. 6A to 6D are views illustrating a process for detecting a schedule to register in a schedule management function in an electronic device according to another exemplary embodiment of the present invention.

First, according to an exemplary embodiment of the present invention, the electronic device can determine a schedule to register in the schedule management function by detecting an input of a user who selects the schedule included in an output screen that is currently output.

At this point, the electronic device can detect the user's input for a predetermined time and use text information corresponding to the detected user's input as schedule registration information.

That is, as illustrated in FIG. 6A, the electronic device can detect the user's input with a web screen 601 including schedule information output. As illustrated, the electronic device can determine text 603 of "experience event" corresponding to a position where the user's input has been detected from the output screen and use the determined text as schedule registration information.

In addition, the electronic device can obtain a plurality of schedule registration information by repeatedly performing the above method.

That is, as illustrated in FIG. 6B, the electronic device can determine text 605 of "publication date" corresponding to a position where the user's successive input has been detected from the output screen and use the determined text as schedule registration information, and then as illustrated in FIG. 6C, the electronic device can determine text 607 of "June 21" corresponding to a position where the user's successive input has been detected from the output screen and use the determined text as schedule registration information.

The electronic device that has extracted schedule register information as described above can register the schedule registration information in the schedule management function as illustrated in FIG. 6D.

At this point, as illustrated, the electronic device can determine a schedule registration date using text of "June 21" which is a detailed schedule, list all extracted schedule registration information, and register the same in the determined date. That is, the electronic device can register <experience event publication date June 21> in June 21. In addition, the electronic device can register <experience event publication date> in June 21. This represents the electronic device that uses a detailed schedule as only a schedule register date, and registers only a schedule title excluding the detailed schedule in the relevant date.

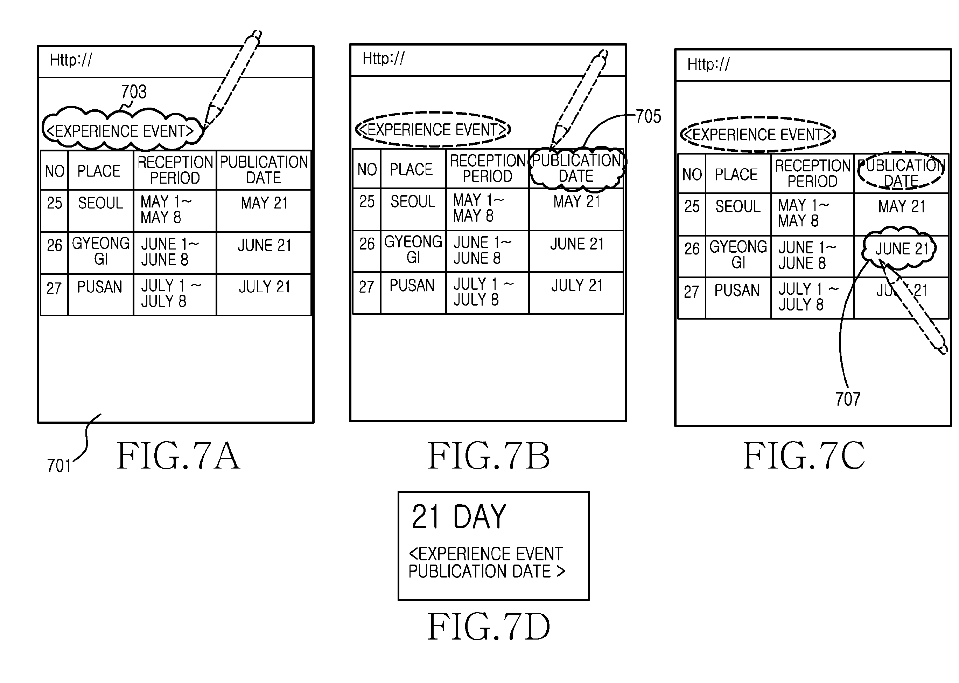

FIGS. 7A to 7D are views illustrating a process for detecting a schedule to register in a schedule management function in an electronic device according to another exemplary embodiment of the present invention.

First, according to an exemplary embodiment of the present invention, the electronic device can detect a user's input for selecting a schedule included in a current output screen and determine a schedule to register in the schedule management function.

At this point, the user of the electronic device can define a mark for designating a schedule to register and a mark for completing schedule designation using a predetermined shape (such as a cloud shape, circle shape, etc.). The electronic device can detect the user's input for a predetermined time and use text information corresponding to the detected user's input as schedule registration information. In addition, the user can define the mark for designating the schedule to register and the mark for completing schedule designation as a mark of the same shape, or marks of different shapes. For example, the user can define the mark for designating the schedule to register as a mark of a cloud shape, and the mark for completing schedule designation as a mark of a circle shape. This means that the electronic device can provide a function for defining a shape of this mark so that the user may define manually the mark of a shape according to the user's preference.

That is, the electronic device can detect the user's input with a web screen 701 including schedule information output as illustrated in FIG. 7A. As illustrated, when detecting a mark 703 of a cloud shape for designating a schedule to register from an output screen, the electronic device can determine text of <experience event> corresponding to a position where the user's input has been detected and use the determined text as schedule registration information.

In addition, the electronic device can obtain a plurality of schedule registration information by repeatedly performing the above method.

That is, as illustrated in FIG. 7B, the electronic device can determine text 705 of <publication date> corresponding to a position where the user's input of a cloud shape has been successively detected from the output screen and use the determined text as schedule registration information, and then as illustrated in FIG. 7C, the electronic device can determine text 707 of <June 21> corresponding to a position where the user's input of a cloud shape has been successively detected from the output screen and use the determined text as schedule registration information. At this point, the electronic device can define a mark for completing schedule designation separately. This means the electronic device can define the mark for designating a schedule and the mark for completing schedule designation as a mark of the same shape or marks of different shapes.

The electronic device that has extracted schedule registration information as described above can register schedule registration information in the schedule management function as illustrated in FIG. 7D.

At this point, as illustrated, the electronic device can determine a schedule registration date using text of <June 21> which is a detailed schedule, and list and register all extracted schedule registration information in the determined date. That is, the electronic device can register <experience event publication date June 21 > in June 21. In addition, the electronic device can register <experience event publication date> in June 21. This represents the case where the electronic device uses the detailed schedule as only a schedule register date, and registers only a schedule title excluding the detailed schedule in the relevant date.

In addition, the electronic device determines a schedule to register using a mark defined by the user, and the user can additionally register a mark of a shape favored by the user.

Of course, the electronic device can determine a schedule selected by the user using the mark for completing schedule designation defined by the user, but in another exemplary embodiment, the electronic device can operate a separate timer to determine a schedule selected by the user while the timer operates.

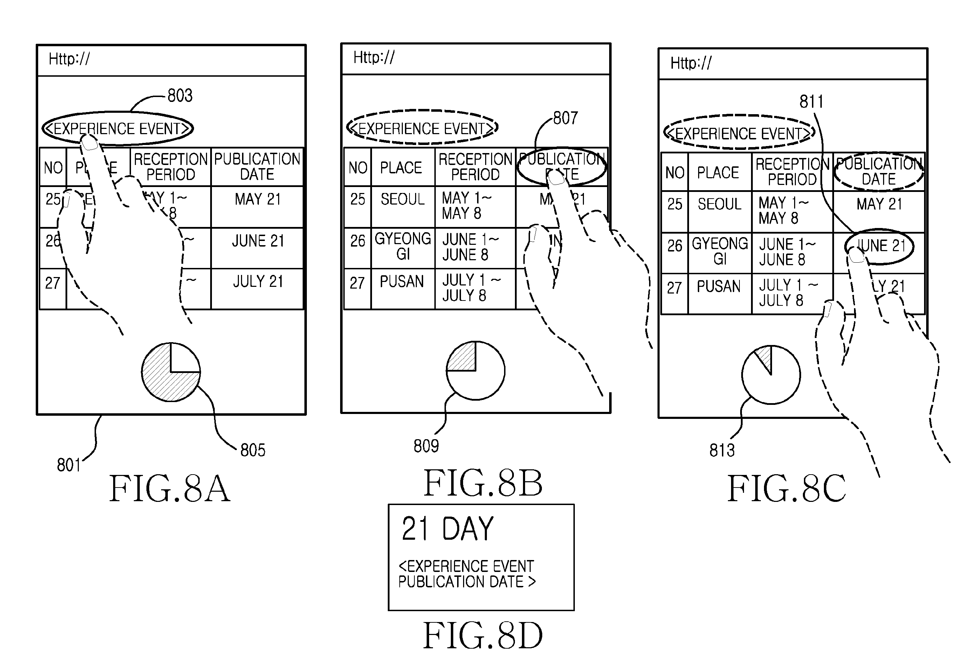

FIGS. 8A to 8D are views illustrating a process for detecting a schedule to register in a schedule management function in an electronic device according to another exemplary embodiment of the present invention.

First, according to an exemplary embodiment of the present invention, the electronic device can detect a user's input for selecting a schedule included in an output screen that is currently output to determine a schedule to register in the schedule management function.

At this point, the electronic device can output a timer representing a time for which the electronic device can receive a schedule to register in the schedule management function, and then detect the user's input, and use text information corresponding to the detected user's input as schedule registration information.

That is, the electronic device can detect the user's input 803 with a web screen 801 including schedule information output as illustrated in FIG. 8A. As illustrated, the electronic device can determine text of <experience event> corresponding to a position where the user's input has been detected from an output screen and use the determined text as schedule registration information. After that, the electronic device can output a timer 805 on a portion of an output screen that is currently output to provide a selectable time for a schedule to register in the schedule management function to the user.

That is, the user selects a schedule for an operation time of the timer output on the output screen, and the electronic device can determine a point at which the timer expires as a point at which schedule designation is completed.

In addition, the electronic device can obtain a plurality of schedule registration information by repeatedly performing the above method until the timer expires.

That is, as illustrated in FIG. 8B, the electronic device can determine text 807 of <publication date> corresponding to a position where the successive user's input has been input from the output screen while the timer operates and use the determined text as schedule registration information, and then as illustrated in FIG. 8C, the electronic device can determine text 811 of <June 21> corresponding to a position where the successive user's input has been detected from the output screen and use the determined text as schedule registration information. Of course, the timer can inform the user that time passes continuously by changing a remaining time on the timer 809 and 813 until a timer expiration point.

In the case of determining the timer expires while extracting the schedule registration information, the electronic device can register the schedule registration information extracted while the timer operates in the schedule management function as illustrated in FIG. 8D.

At this point, as illustrated, the electronic device can determine a schedule register date using text of <June 21> which is a detailed schedule and list and register all extracted schedule registration information in the determined date. That is, the electronic device can register <experience publication date June 21> in June 21. In addition, the electronic device can register <experience publication date> in June 21. This represents the case where the electronic device uses a detailed schedule as only a schedule registration date, and registers only a schedule title excluding the detailed schedule in the relevant date.

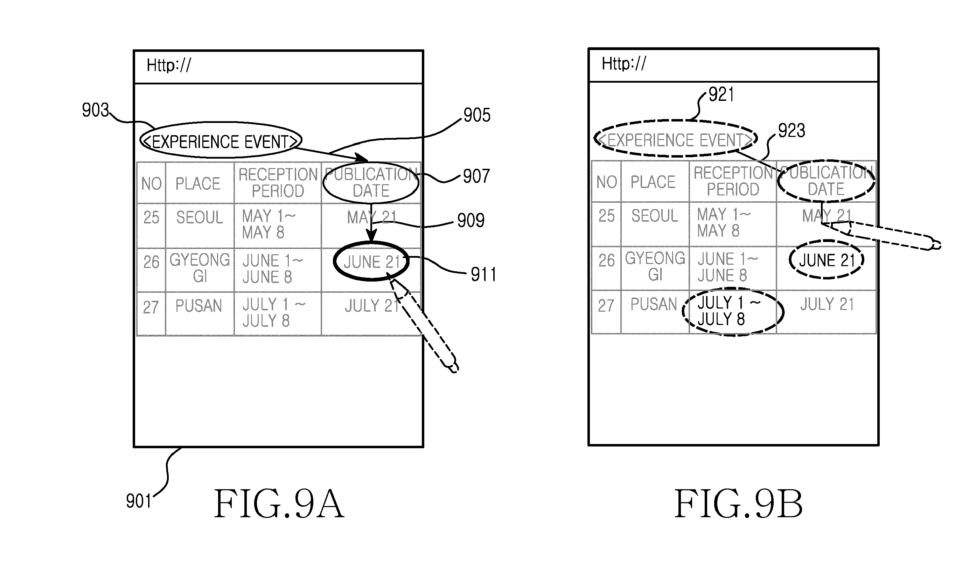

FIGS. 9A to 9B are views illustrating a process for detecting a schedule to register in a schedule management function in an electronic device according to another exemplary embodiment of the present invention.

First, according to an exemplary embodiment of the present invention, the electronic device can detect a user's input for selecting a schedule included in an output screen that is currently output to determine a schedule to register in the schedule management function.

At this point, the user of the electronic device can designate a schedule to register in the schedule management function with a touch input maintained for a predetermined time.

That is, as illustrated in FIG. 9A, the electronic device can determine the user's touch input section in an output screen 901. Here, the touch input section denotes a section moved by one time of a touch input. At least two points can pass through the touch input section.

Referring to the illustrated drawing, the user of the electronic device can draw a circle for a position to use as schedule registration information, and release a touch input in the case where schedule registration information designation is completed. Of course, the user displays a position to use as schedule registration information using a circle while consistently maintaining a touch input until the user releases the touch input. In the illustrated drawing, lines 905 and 909 connecting a circle represent a path along which the user's touch input moves. The user has selected <experience event> 903 which is a schedule title, <publication date> 907, and <June 21> 911 which is a detailed schedule with a single touch movement.

That is, the electronic device obtains schedule registration information of a position where the user's input that draws a circle has been detected, and obtains different schedule registration information while detecting the user's continuous touch input.

When detecting that the user's touch input is released, the electronic device determines the user has completed designation of schedule registration information.

In another exemplary embodiment of the present invention, the electronic device can detect the user's input for selecting a schedule included in an output screen to determine the schedule to register in the schedule management function.

At this point, the user of the electronic device can select a schedule to register in the schedule management function via a final touch input while selecting a plurality of schedules.

That is, referring to FIG. 9B, the electronic device can determine a schedule selected from an output screen by the user. At this point, the user can select a schedule to register in the schedule management function using the plurality of above-described methods. After that, the electronic device allows the user to select a final schedule to register in the schedule management function from selected schedules.

Referring to the illustrated drawing, a case where the user of the electronic device selects a plurality of schedules and then defines a schedule to finally select via a touch input of drawing a line is illustrated. In the illustrated drawing, a circle 921 represents schedules selected by the user, and a line 923 connecting the circle represents schedules selected by the user. That is, only <experience event>, publication date, and June 21 among the schedule registration information of <experience event>, publication date, June 21, and July 1 ∼ July 8 selected by the user, are used as schedule registration information.

Of course, the user can select a plurality of schedules using a predetermined mark and the electronic device can define a time for which the user can select a schedule by driving a timer.

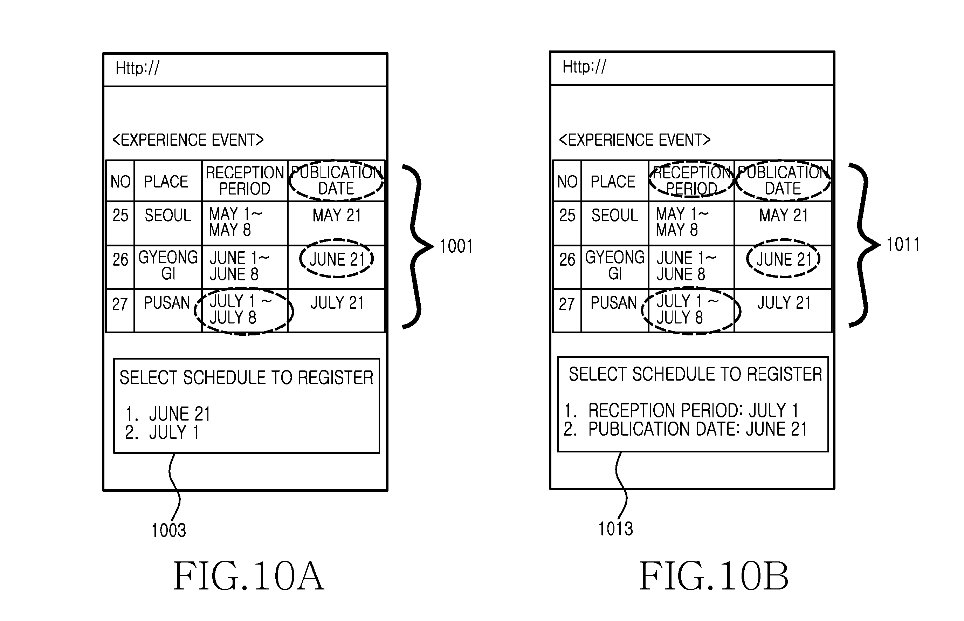

FIGS. 10A and 10B are views illustrating a screen for providing a list of schedule register information to register in a schedule management function in an electronic device according to another exemplary embodiment of the present invention.

FIG. 10A illustrates how the electronic device according to an exemplary embodiment of the present invention can determine a schedule to register in the schedule management function by detecting a user's input from an output screen that is currently output.

In the case 1001 where the user selects a plurality of detailed schedules as illustrated, the electronic device can register schedule registration information in a plurality of detected detailed schedules.

However, the user might elect to register only a portion of the plurality of selected schedules in the schedule management function.

Accordingly, the electronic device can allow the user to select a schedule to register in the schedule management function by outputting a list 1003 of schedules selected by the user. This case may be a case where the electronic device has detected a plurality of detailed schedules 1001 with respect to one schedule title, which is illustrated in FIG. 10A.

In addition, in the case where the user selects a plurality of schedule titles and a plurality of detailed schedules, the electronic device might not be able to accurately determine a detailed schedule suitable for a schedule title.

To address this problem, the electronic device can allow the user to select a schedule to register in the schedule management function by outputting a list 1013 of schedule register information with respect to a schedule 1011 selected by the user as illustrated in FIG. 10B.

The drawing illustrated in FIG. 10B illustrates the electronic device determining a schedule title and a detailed schedule automatically. For example, the list 1013 can include a first entry corresponding to the schedule title "Reception Period" and a second entry corresponding to the schedule title "Publication Date."

Also, a case where the electronic device cannot accurately determine a detailed schedule suitable for a schedule title may occur. In this case, the electronic device outputs a list of schedule titles first and allows a user to select a schedule title to register.

After that, the electronic device can output a list of detailed schedules and allow the user to select from the list a detailed schedule corresponding to a schedule title selected in advance, and then process to register the selected detailed schedule in the schedule management function.

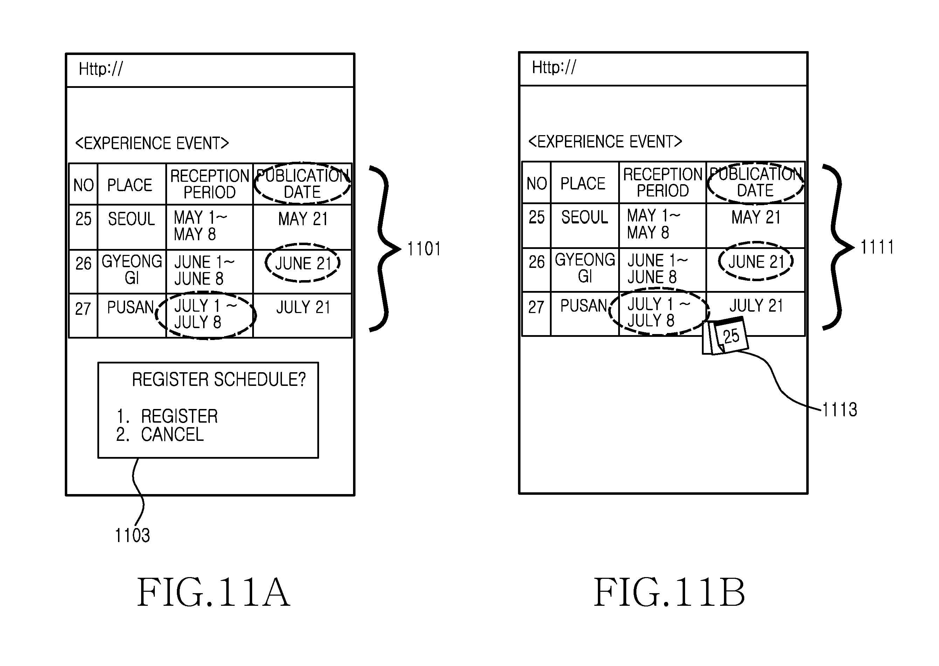

FIGS. 11A and 11B are views illustrating a screen for executing a schedule management function in an electronic device according to an exemplary embodiment of the present invention.

First, when determining that schedules 1101 to register in the schedule management function are selected by the user, the electronic device can output a popup message 1103 to register a schedule selected by the user in the schedule management function.

At this point, the popup message output by the electronic device includes content asking whether to register a schedule in the schedule management function.

Accordingly, the user can process to register a schedule selected by the user in the schedule management function by selecting a register menu option of the popup message.

In contrast, the user can cancel the registration of a schedule selected by the user in the schedule management function by selecting a cancel menu option of the popup message.

A method for executing the schedule management function using the popup message is illustrated in FIG. 11A.

Also, when determining schedules to register in the schedule management function that are selected by the user, the electronic device can output an icon 1113 of the schedule management function that can cooperate with the user's selection on a portion of the output screen. For example, the icon 1113 can provide a visual indication to the user that the schedule can be registered in the schedule management function.

Accordingly, the user can select the output icon of the schedule management function and process to register a schedule selected by the user in the schedule management function.

A method for executing the schedule management function using the icon can be illustrated in FIG. 11B. For example, the user can register the selected schedules 1111 in the schedule management function by selecting the icon 1113.

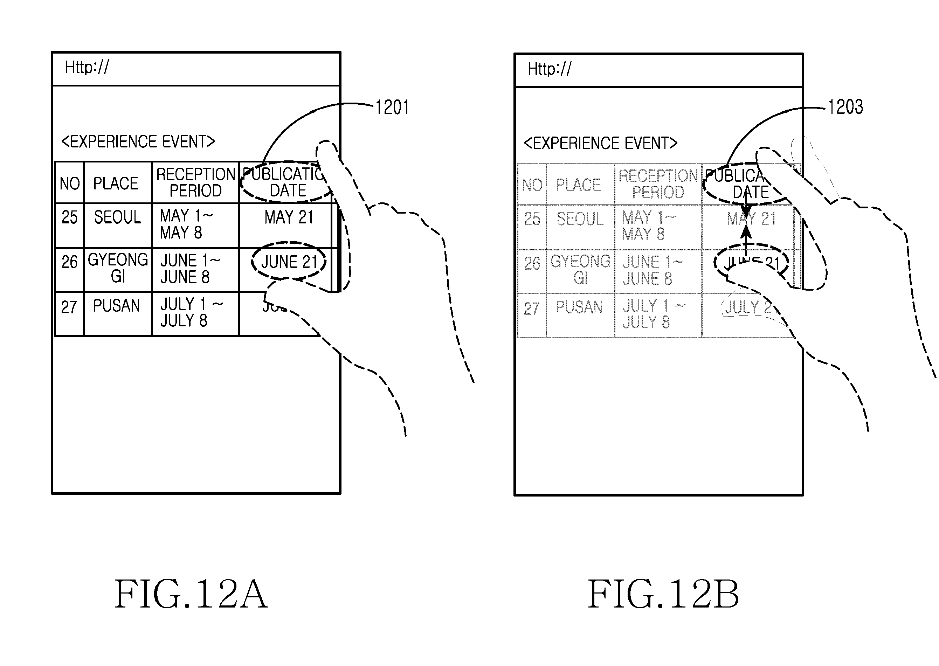

FIGS. 12A and 12B are views illustrating a screen for registering a schedule of a web screen in a schedule management function in an electronic device according to another exemplary embodiment of the present invention.

Referring to FIG. 12A, the electronic device can output a web screen by executing a web browser. The output web screen includes schedule information as illustrated.

Generally, the electronic device of the related art can provide a schedule management function managing the user's schedule. To register a schedule included in the web screen in the schedule management function of the related art, a user is required to memorize a schedule of the web screen. After that, the user is required to execute the schedule management function via menu selection and then select a date corresponding to the memorized schedule to register the schedule.

However, the electronic device according to an exemplary embodiment of the present invention can process to automatically register a schedule, selected from a current output screen by the user, in the schedule management function.

For example, as described above, the electronic device can analyze the user's input detected for a predetermined time and extract schedule registration information to register the extracted information in the schedule management function. At this point, the electronic device can detect the user's input while a timer operates and extract schedule registration information.

In addition, the electronic device can detect a mark defined by the user in advance and extract schedule registration information to register the extracted information in the schedule management function. At this point, the user can define a mark for designating a schedule (schedule to register in the schedule management function), a mark for informing schedule designation completion, etc.

In addition, referring to FIG. 12, the electronic device can select a schedule to register in the schedule management function with a multi-touch input.

That is, referring to FIG. 12A, the user can select a schedule 1201 including "publication date" and "June 21" which are text included in the current output screen with a multi-touch input. Accordingly, the electronic device analyzes a text recognition process for an image and an HTML tag to extract schedule registration information selected by the user.

After that, the electronic device can determine whether the user's input for registering schedule registration information in the schedule management function is detected. As illustrated in FIG. 12B, the user can register schedule registration information by allowing text 1203 selected in advance to overlap each other. An operation of registering schedule register information can be changed by the user. For example, the user can register the schedule registration information by moving text selected in advance to at least one of up, down, left, right, and diagonal directions.

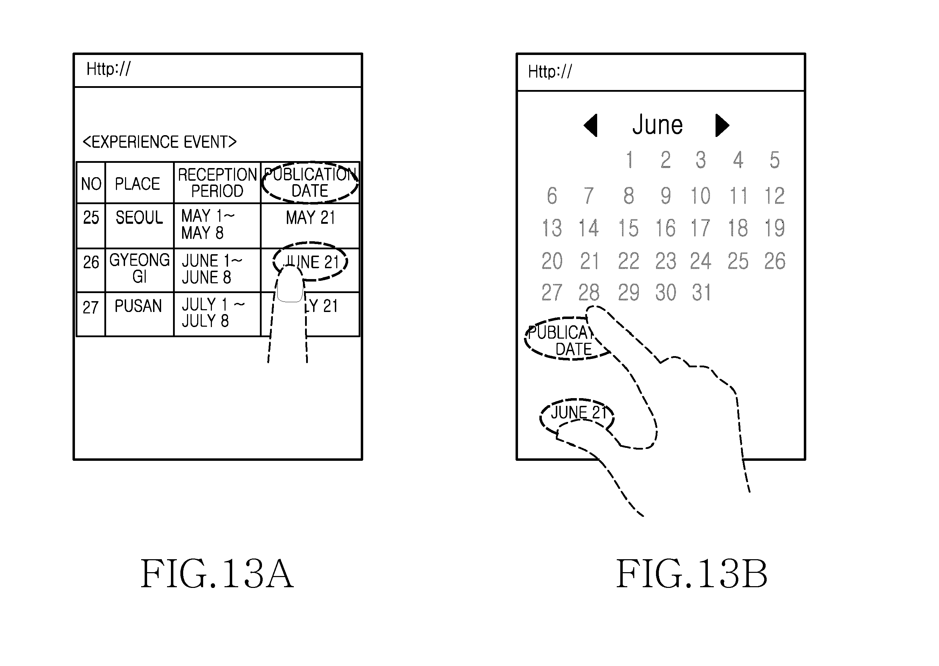

FIGS. 13A and 13B are views illustrating a screen for registering a schedule of a web screen in a schedule management function in an electronic device according to still another exemplary embodiment of the present invention.

Referring to FIG. 13A, the electronic device can output a web screen by executing a web browser. The output web screen includes schedule information as illustrated.

Generally, the electronic device of the related art can provide a schedule management function managing the user's schedule. To register a schedule included in the web screen in the schedule management function of the related art, a user is required to memorize a schedule of the web screen. After that, the user is required to execute the schedule management function via menu selection and then select a date corresponding to the memorized schedule to register the schedule.

However, the electronic device according to an exemplary embodiment of the present invention can process to automatically register a schedule selected from a current output screen by the user in the schedule management function.

For example, as described above, the electronic device can analyze the user's input detected for a predetermined time and extract schedule registration information to register the extracted information in the schedule management function. At this point, the electronic device can detect the user's input while a timer operates and extract schedule registration information.

In addition, the electronic device can detect a mark defined by the user in advance and extract schedule registration information to register the extracted information in the schedule management function. At this point, the user can define a mark for designating a schedule (for example, a schedule to register in the schedule management function), a mark for informing schedule designation completion, etc.

In addition, the electronic device can register a selected schedule in the schedule management function with a multi-touch input.

In addition, according to an exemplary embodiment of the present invention, when a schedule to register in the schedule management function is selected, a current output screen can be replaced with a screen on which the schedule management function has been performed.

That is, as illustrated in FIG. 13A, when detecting the user's input for designating a schedule from a screen that is currently output, the electronic device can change the current output screen to a screen on which the schedule management function has been executed as illustrated in FIG. 13B. At this point, as illustrated, the electronic device outputs a schedule selected by the user on a portion of the output screen, and the user can register the relevant schedule in the schedule management function by moving the schedule that is being input by the user to a relevant date of the schedule management function.

For another example, the electronic device can output a screen on which the schedule management function is executed on a portion of the current output screen, so that two screens can be output simultaneously. At this point, the electronic device can control the opacity of at least one screen. In an exemplary implementation, since a schedule is selected, the electronic device can lower the opacity (or increase the transparency) of the current output screen (for example, the screen including the schedule) and clearly output the screen on which the schedule management function has been executed.

Accordingly, the user can register a relevant schedule in the schedule management function by moving the schedule to a desired date of the schedule management function with an input of the selected schedule maintained.

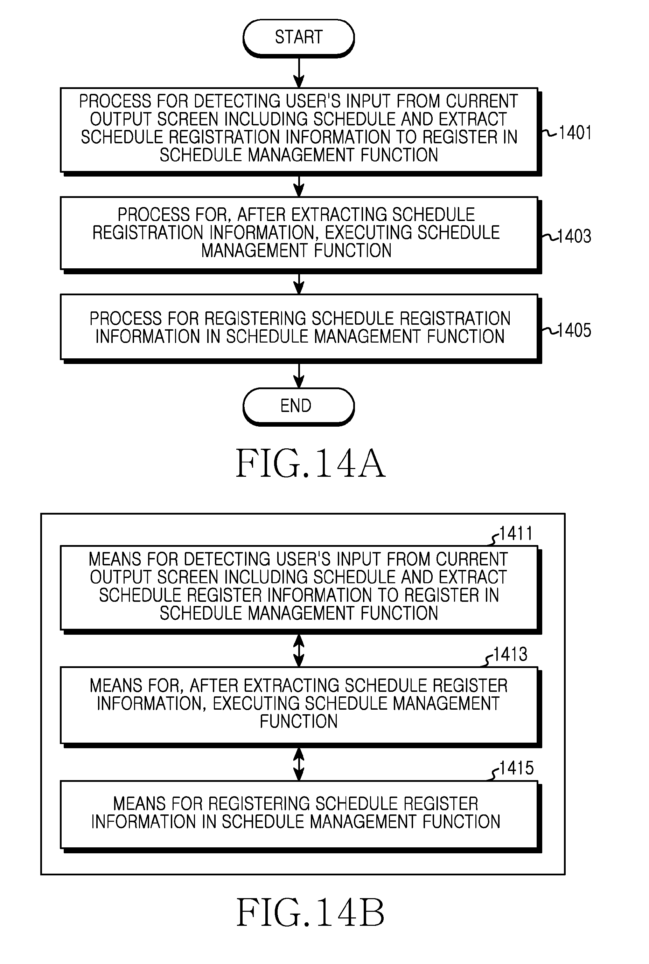

FIG. 14A is a flowchart illustrating a process for registering a schedule of an output screen in a schedule management function in an electronic device according to another exemplary embodiment of the present invention.

Referring to FIG. 14A, the electronic device can perform a process 1401 for detecting a user's input from a current output screen including a schedule to extract schedule registration information to register in the schedule management function, a process 1403 for, after extracting the schedule registration information, executing the schedule management function, and a process 1405 for registering the schedule registration information in the schedule management function.

The process 1401 for detecting the user's input from the current output screen including the schedule to extract the schedule registration information to register in the schedule management function may be a process for detecting the user's input for the current output screen and then defining information included in a position where the user's input has been detected as schedule registration information.

At this point, the electronic device can store information of the position where the user's input has been detected and then perform a process of analyzing an image of the output screen and HTML tag information of the output screen. The electronic device that has performed this process can obtain information to use as schedule registration information.

In addition, the electronic device detects the user's input to extract a plurality of schedule registration information. At this point, the electronic device can extract schedule registration information corresponding to an input every point where the user's input is detected.

For another example, the electronic device can detect a point at which the user's input is completed and extract all schedule registration information selected by the user at a time.

In addition, the process 1403 for, after extracting the schedule registration information, executing the schedule management function is a process for executing a schedule management function for registering the extracted schedule registration information, and may be a process for executing, at the electronic device, a schedule application among applications installed in advance.

In addition, the process 1405 for registering the schedule registration information in the schedule management function is a process for registering, at the electronic device, schedule registration information extracted from the current screen in the schedule management function, and the electronic device can register all of extracted schedule registration information in a relevant date or register only a schedule title excluding a detailed schedule in the relevant date.

An instruction set for each process of FIG. 14A can be included in the register information extraction program, and the schedule program of the memory 110 of FIG. 1, and the programs can be executed by one or more processors.

FIG. 14B is a view illustrating the construction of an electronic device that registers a schedule of an output screen in a schedule management function according to another embodiment of the present invention.First, the electronic device can include means 1411 for detecting a user's input from a current output screen including a schedule to extract schedule register information to register in the schedule management function, means 1413 for, after extracting the schedule register information, executing the schedule management function, and means 1415 for registering the schedule register information in the schedule management function.The means 1411 for detecting the user's input from the current output screen including the schedule to extract the schedule register information to register in the schedule management function can detect the user's input for the current output screen and then define information included in a position where the user's input has been detected as the schedule register information.At this point, the means 1411 can store information of the position where the user's input has been detected and then perform a process of analyzing an image of the output screen and HTML Tag information of the output screen. The means 1411 that has performed this process can obtain information to use as schedule register information.In addition, the means 1411 can detect the user's input to extract a plurality of schedule register information. At this point, the means 1411 can extract schedule register information corresponding to the user's input every point at which the user's input is detected.For another example, the means 1411 can detect a point at which the user's input is completed and extract all schedule register information selected by the user at a time.In addition, the means 1413 for, after extracting the schedule register information, executing the schedule management function executes the schedule management function for registering the extracted schedule register information, and the means 1413 can execute a schedule application among applications installed in advance.In addition, the means 1415 for registering the schedule register information in the schedule management function registers schedule register information extracted from the current screen in the schedule management function, and the means 1415 can register all of extracted schedule register information in a relevant date or register only a schedule title excluding a detailed schedule in the relevant date.These means can be configured as separate hardwares, respectively, or one hardware.

According to an electronic device and a method for providing a schedule management function, a schedule selected by a user is analyzed and schedule registration information is extracted, and the extracted schedule registration information is immediately registered in the schedule management function (for example, a calendar or schedule application), so that a schedule registration process of the electronic device can be simplified.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of managing schedule information in an electronic device, the method comprising:
detecting a user's input from a current output screen comprising a schedule;
extracting schedule registration information from the schedule according to the user's input;
executing a schedule management function; and
registering the extracted schedule registration information in the schedule management function.

2. The method of claim 1, further comprising:
after extracting the schedule registration information, outputting a message informing that the schedule registration information is registered in the schedule management function.

3. The method of claim 1, wherein the registering of the schedule registration information in the schedule management function comprises:
when a plurality of schedule registration information are extracted, outputting a list of the extracted schedule registration information;
selecting, by the user, schedule registration information from the output list; and
registering the selected schedule registration information in the schedule management function.

4. The method of claim 1, wherein the extracting of the schedule registration information to register in the schedule management function comprises:
storing information of a position where the user's input has been detected;
obtaining an image of the current output screen;
recognizing text corresponding to the stored position information in the obtained image; and
defining the obtained text as schedule registration information.

5. The method of claim 1, wherein the user's input detected for extracting the schedule registration information comprises at least one of an input of successively selecting schedules for a predetermined time, an input of selecting a schedule using a mark of a predetermined shape, an input of selecting a schedule using a multi-touch, an input of selecting a plurality of schedules and then selecting at least one schedule of the plurality of schedules to register in the schedule management function, and an input of selecting a plurality of schedules using single touch.

6. The method of claim 1, wherein the schedule registration information comprises at least one of a schedule title and a detailed schedule included in the current output screen.

7. A computer readable storage medium encoded with one or more programs comprising instructions which, when executed by an electronic device, cause the electronic device to perform the method of claim 1.

8. An electronic device including a schedule management function, the electronic device comprising:
at least one processor;
a memory; and
at least one program stored in the memory and configured for execution by the at least one processor,
wherein, when the program is executed by the at least one processor, the at least one processor controls to detect a user's input from a current output screen comprising a schedule to extract schedule registration information, executes the schedule management function, and registers the extracted schedule registration information in the schedule management function.

9. The electronic device of claim 8, wherein, when the program is executed, the at least one processor further controls to, after extracting the schedule registration information, output a message informing that the schedule registration information is registered in the schedule management function.

10. The electronic device of claim 8,
wherein, when the program is executed, the at least one processor further controls to, when a plurality of schedule registration information are extracted, output a list of the extracted schedule registration information, and
wherein the user selects schedule registration information to register in the schedule management function from the output list.

11. The electronic device of claim 8, wherein, when the program is executed, the at least one processor further controls to store information of a position where the user's input has been detected, obtain an image of the current output screen, recognize text corresponding to the stored position information in the obtained image, and define the obtained text as schedule registration information.

12. The electronic device of claim 8, wherein, when the program is executed, the at least one processor further controls to extract the schedule registration information by detecting at least one of an input of successively selecting schedules for a predetermined time, an input of selecting a schedule using a mark of a predetermined shape, an input of selecting a schedule using a multi-touch, an input of selecting a plurality of schedules and then selecting at least one schedule of the plurality of schedules to register in the schedule management function, and an input of selecting a plurality of schedules using single touch.

13. The electronic device of claim 8, wherein, when the program is executed, the at least one processor further controls to extract at least one of a schedule title and a detailed schedule included in the current output screen as the schedule registration information.
